# EUROPEAN PATENT APPLICATION

(11) **EP 2 046 094 A1**
(43) Date of publication of application: **08.04.2009**
(21) Application number: 07744164.0
(22) Date of filing: 25.05.2007
(51) Int. Cl.: H05B 33/22, H05B 33/14, C09K 11/56, C09K 11/62, C09K 11/70, C09K 11/74, C09K 11/88

(54) **SURFACE EMITTING ELECTROLUMINESCENT ELEMENT**

(30) Priority: 26.05.2006 JP 2006146676
(71) Applicant: Fujifilm Corporation, Tokyo 106-0031 (JP)
(72) Inventor: YAMASHITA, Seiji c/o FUJIFILM Corporation, Ashigarakami-gun, Kanagawa (JP); SATO, Tadanobu c/o FUJIFILM Corporation, Ashigarakami-gun, Kanagawa (JP); SHIRATA, Masashi c/o FUJIFILM Corporation, Ashigarakami-gun, Kanagawa (JP)
(74) Representative: HOFFMANN EITLE
(86) International application number: PCT/JP2007/060730
(87) International publication number: WO 2007/139033

(57) **Abstract**

In an electroluminescent device which is applied to a backlight and a display device and **characterized in that** a flexible material construction using a plastic substrate is enabled and the device can be produced at a low cost through a relatively simple step without using a vacuum unit and also in that the emission color of the device can be easily controlled by mixing a plurality of fluorescent material particles differing in the emission color or by using a fluorescent dye for the color conversion, the present invention provides a surface emitting-type electroluminescent device capable of using a low voltage AC power source, realizing uniform brightness and having a large-area emission surface.

A surface emitting-type electroluminescent device having a stacked structure in which a transparent electrical conductor layer, a transparent semiconductor layer and/or a transparent insulator layer, a light-emitting layer, a dielectric layer and a back electrode layer are arrayed in this order, the transparent electrical conductor layer, the transparent semiconductor layer, the transparent insulator layer and the dielectric layer each containing a metal oxide.

## Description

### TECHNICAL FIELD

The present invention relates to a surface emitting-type electroluminescent device.

### BACKGROUND ART

The planar emission-type electroluminescent device (hereinafter sometimes referred to as an "EL device") includes, for example, a dispersion-type inorganic EL device where a fluorescent particle is dispersed in a binder having a high dielectric constant (for example, Patent Document 1), a thin film-type inorganic EL device where a dielectric layer having a high dielectric constant and a thin-film light-emitting layer are stacked, and an organic EL device having a structure where an electron transport layer, a hole transport layer and a light-emitting layer each comprising an organic material are stacked.
Patent Document 1: JP-A-2005-339924
Non-Patent Document 1: Keikotai Handbook (Phosphor Handbook), Edition II, Chapter 2, compiled by Keikotai Dogakukai, Ohm-Sha
Non-Patent Document 2: Toshio Inoguchi, Electroluminescent Display, Sangyo Tosho
Non-Patent Document 3: Seizo Miyata (compiler), Yuki EL Soshi to Sono Kogyoka Saizensen (Organic EL Device and Front Line of Its Industrialization), NTS

### DISCLOSURE OF THE INVENTION

### PROBLEMS THAT THE INVENTION IS TO SOLVE

Out of these devices, the organic EL device can be driven by a direct current, which, however, allows for easy occurrence of brightness non-uniformity due to a voltage drop associated with the increase of area and makes it difficult to obtain a uniform and large emission surface.

On the other hand, the dispersion-type inorganic EL device and the thin film-type inorganic EL device each has a structure where an insulating dielectric layer is sandwiched between an electrode and a light-emitting layer, and requires a high voltage for the light emission, typically, an effective voltage of 100 V or more, often 200 V or more, which has a problem in view of safety or raises a problem, for example, that a large-size inverter circuit is necessary.

Under these circumstances, the present invention has been made and aims to solve those problems in conventional techniques and achieve the following objects.

The present invention provides a surface emitting-type electroluminescent device (hereinafter sometimes referred to as a "surface emitting-type EL device") having a stacked structure, which is enhanced in the durability by virtue of being composed of an inorganic material and emits light at a low voltage of 100 V or less. Also, this surface emitting-type electroluminescent device is driven by an alternating current and therefore, the device becomes a capacitive load, facilitating large-area fabrication.

### MEANS FOR SOLVING THE PROBLEMS

The object of the present invention can be attained by the following matters specifying the present invention and preferred embodiments thereof.
(1) A surface emitting-type electroluminescent device having a stacked structure in which a transparent electrical conductor layer, a transparent semiconductor layer and/or a transparent insulator layer, a light-emitting layer, a dielectric layer and a back electrode layer are arrayed in this order, the transparent electrical conductor layer, the transparent semiconductor layer, the transparent insulator layer and the dielectric layer each containing a metal oxide.
(2) The surface emitting-type electroluminescent device as in (1), wherein the transparent semiconductor layer and the transparent insulator layer each contains at least one element selected from the group consisting of elements belonging to Groups 12, 13 and 14 of the Periodic Table.
(3) The surface emitting-type electroluminescent device as in (1) or (2), wherein the light-emitting layer contains a compound semiconductor containing at least one element selected from the group consisting of Group 2 elements and Group 16 elements of the Periodic Table and/or at least one element selected from the group consisting of Group 13 elements and Group 15 elements of the Periodic Table.
(4) The surface emitting-type electroluminescent device as in any one of (1) to (3), wherein the transparent electrical conductor layer is formed on a film comprising an organic material and/or a plastic substrate.
(5) The surface emitting-type electroluminescent device as in any one of (1) to (4), wherein the effective driving voltage is 100 V or less.

### ADVANTAGE OF THE INVENTION

In the surface emitting-type electroluminescent device of the present invention, the transparent electrical conductor layer, the transparent semiconductor layer and/or the transparent insulator layer, and the dielectric layer each contains a metal oxide, whereby the device can be driven by a low voltage AC power source, can realize uniform brightness and can have a large-area emission surface.

### BRIEF DESCRIPTION OF THE DRAWINGS

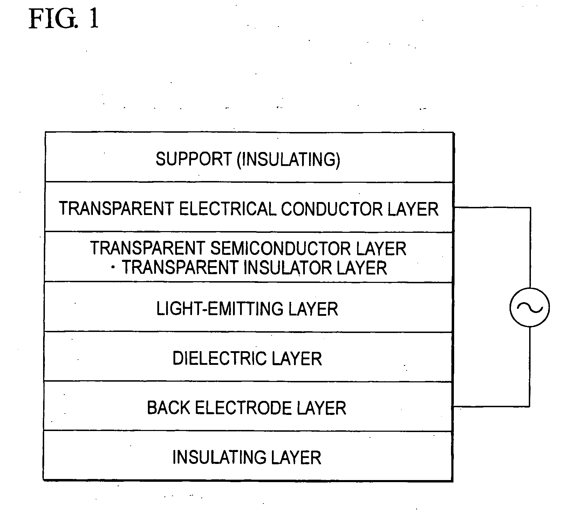

[Fig. 1] A cross-sectional schematic view showing one embodiment of the surface emitting-type electroluminescent device of the present invention.

### BEST MODE FOR CARRYING OUT THE INVENTION

The surface emitting-type electroluminescent device of the present invention is characterized by having a stacked structure in which a transparent electrical conductor layer, a transparent semiconductor layer and/or a transparent insulator layer, a light-emitting layer, a dielectric layer and a back electrode layer are arrayed in this order, the transparent electrical conductor layer, the transparent semiconductor layer, the transparent insulator layer and the dielectric layer each containing a metal oxide.

The embodiment of the present invention is described in detail below based on the drawing.
Fig. 1 is a schematic view showing the construction of the surface emitting-type electroluminescent device according to the present invention.
As shown in Fig. 1, the surface emitting-type electroluminescent device comprises an insulating support and has a stacked structure where a transparent electrical conductor layer, both a transparent semiconductor layer and a transparent insulator layer or either a transparent semiconductor layer or a transparent insulator layer, a light-emitting layer, a dielectric layer, a back electrode layer and an insulating layer are arrayed in this order on the support. An AC power source is connected to the transparent electrical conductor layer and the back electrode layer.
In the case of having both a transparent semiconductor layer and a transparent insulator layer, the layers are stacked on the support in the order of a transparent electrical conductor layer/a transparent semiconductor layer/a transparent insulator layer/a light-emitting layer/a dielectric layer/a back electrode layer/an insulating layer.

### (Support)

In the surface emitting-type EL device of the present invention, a transparent electrical conductor layer is preferably formed on an insulating support. The support which can be used here is preferably a film comprising an organic material and/or a plastic substrate. The substrate indicates a member on which' a transparent electrical conductor layer is formed. In the case of a film, a high-molecular polymer material which is an organic material may be preferably used. Examples of the film comprising an organic material include a transparent film such as polyethylene terephthalate, polyethylene naphthalate or triacetyl cellulose base. Examples of the plastic substrate include polyethylene, polypropylene, polyamide, polycarbonate and polystyrene.
Also, a glass substrate or a ceramic substrate may be used as the support.
The thickness of the support is preferably from 30 µm to 1 cm, more preferably from 50 to 1,000 µm.

### (Transparent Electrical Conductor Layer)

The transparent electrical conductor layer preferably used in the present invention has a surface resistance value of preferably 0.01 to 10 Ω/sq., more preferably from 0.01 to 1 Ω/sq.
The surface resistivity of the transparent electrical conductor layer can be measured according to the method described in JIS K6911.
The transparent electrical conductor layer for use in the present invention contains a metal oxide. The transparent electrical conductor layer is preferably formed on a film composed of an organic material, such as polyethylene terephthalate, polyethylene naphthalate or triacetyl cellulose base, and/or a plastic substrate.
The transparent electrical conductor layer is obtained, for example, by attaching and film-forming a transparent electrically conductive material such as indium-tin oxide (ITO), tin oxide and zinc oxide on a film composed of an organic material and/or on a plastic substrate by a method such as vapor deposition, coating and printing.
In this case, for the purpose of increasing the durability, the surface of the transparent electrical conductor layer is preferably a layer mainly comprising tin oxide.
The preparation method of the transparent electrical conductor layer may be a vapor phase method such as sputtering and vacuum vapor deposition. Also, past-like ITO or tin oxide may be applied by coating or screenprinting and film-formed by heating the entire film or under heating with a laser. In this case, a transparent film having high heat resistance may be preferably used.

In the surface emitting-type EL device of the present invention, an arbitrary transparent electrode material generally employed is used for the transparent electrical conductor layer. Examples thereof include a metal oxide such as tin-doped tin oxide, antimony-doped tin oxide, zinc-doped tin oxide, fluorine-doped tin oxide and zinc oxide; a multilayer structure in which a thin silver film is sandwiched between high refractive index layers; and a conjugated polymer such as polyaniline and polypyrrole.
In the case of attaining a lower resistance than with such a material alone, the electric conduction is preferably improved, for example, by disposing a thin metallic wire of comb type, grid type or the like in a network or striped pattern. As for the thin metallic or alloy wire, copper, silver, aluminum nickel or the like is preferably used. The thin metallic wire may have an arbitrary size, but the size is preferably between about 0.5 µm and 20 µm. The thin metallic wire is preferably disposed at intervals with a pitch of 50 to 400 µm, more preferably from 100 to 300 µm. When the thin metallic wire is disposed, the transmittance of light decreases. This decrease is preferably as small as possible, and it is more preferred to ensure a transmittance of 80% to less than 100%.
The thickness of the transparent electrical conductor layer is preferably from 30 nm to 100 µm, more preferably from 50 nm to 10 µm.

As for the thin metallic wire, a mesh may be laminated to a transparent electrically conductive film or a metal oxide or the like may be coated or vapor deposited on a thin metallic wire previously formed on a film by vapor deposition or etching through a mask. Furthermore, the above-described thin metallic wire may be formed on a previously formed thin metal oxide film.
Although different from these methods, instead of the thin metallic wire, a thin metal film having an average thickness of 100 nm or more may be stacked with a metal oxide to form a transparent electrical conductor layer suitable for the present invention. The metal used for the thin metal film is preferably a metal having high corrosion resistance and being excellent in the ductility and the like, such as Au, In, Sn, Cu and Ni, but the present invention is not limited thereto.

Such a multilayer film preferably realizes a high light transmittance and preferably has a light transmittance of 70% or more, more preferably 80% or more. The wavelength used for specifying the light transmittance is 550 nm.

### (Transparent Semiconductor Layer and Transparent Insulator Layer)

The transparent semiconductor layer and/or transparent insulator layer for use in the present invention are provided between the transparent electrical conductor layer and the light-emitting layer and contains a metal oxide.
The element which can be contained in the transparent semiconductor layer and transparent insulator layer is preferably an element of Group 2, Group 3, Group 9, Group 12 (old Group 2B (old Group IIb)), Group 13 (old Group 3B (old Group III)), Group 14 (old Group 4B (old Group IV)), Group 15 (old Group 5B (old Group V)) or Group 16 of the Periodic Table, more preferably at least one element selected from the group consisting of elements of Group 12, Group 13 and Group 14. Specific examples thereof include Ga, In, Sn, Zn, Al, Sc, Y, La, Si, Ge, Mg, Ca, Sr, Rh and Ir, with Ga, In, Sn, Zn, Si and Ge being preferred.
Other than these elements, the transparent semiconductor may preferably contain a chalcogenide (e.g., S, Se, Te), Cu, Ag or the like.
One of these elements or a plurality of the elements above may be used.

Specific examples of the metal oxide which can be contained in the transparent semiconductor layer and/or transparent insulator layer are set forth below. Examples of the metal oxide which can be contained in the transparent semiconductor layer and/or transparent insulator layer include the followings:
LaCuOS, LaCuOSe, LaCuOTe
SrCu₂O₂
ZnO-Rh₂O₃, ZnRh₂O₄
CuAlO₂
For obtaining such a metal oxide, a general method such as plasma oxidation method, natural oxidation method and vapor deposition method (for example, sputtering using an oxide as the target) may be employed.
The transparent semiconductor is described in detail in Gekkan Optronics (Monthly Optronics), pp. 115-165 (October, 2004), and Kino Zairyo (Functional Materials), Vol. 25, No. 4 (April, 2005).
In the electroluminescent device of the present invention, the thickness of the transparent semiconductor layer and transparent insulator layer is preferably from 1 nm to 100 µm, more preferably from 1 nm to 1 µm.
The light transmittance of the layer is preferably 80% or more in terms of light transmittance at 550 nm.

### (Light-Emitting Layer)

The light-emitting layer for use in the present invention is provided between the transparent semiconductor layer and/or transparent insulator layer and the dielectric layer.
In the electroluminescent device of the present invention, the thickness of the light-emitting layer is preferably from 0.1 to 100 µm, more preferably from 0.1 to 3 µm.

In regard to the specific material as the fluorescent substance contained in the light-emitting layer, at least one element selected from the group consisting of Group 2 (old Group 2A (old Group II)) elements and Group 16 (old Group 6B (old Group VI)) elements of the Periodic Table and/or at least one element selected from the group consisting of Group 13 elements and Group 15 elements of the Periodic Table are preferably contained, and these are arbitrarily selected according to the required light emission wavelength region.
In the light-emitting layer, Group II-VI and Group III-V compound semiconductors may be preferably used. Also, an N-type semiconductor is preferred.
The carrier density is preferably 10¹⁷ cm⁻³ or less, and a donor-acceptor-type luminescence center is preferred.
The carrier density and the like can be determined, for example, by a hole effect measuring method generally employed in the art.

Specific examples of the fluorescent substance contained in the light-emitting layer include CdS, CdSe, CdTe, ZnS, ZnSe, ZnTe, CaS, MgS, SrS, GaP, GaAs, GaN, InP, InAs and a mixed crystal thereof, and ZnS, ZnSe, CaS and the like may be preferably used.
Furthermore, BaAl₂S₄, CaGa₂S₄, Ga₂O₃, Zn₂SiO₄, Zn₂GaO₄, ZnGa₂O₄, ZnGeO₃, ZnGeO₄, ZnAl₂O₄, CaGa₂O₄, CaGeO₃, Ca₂Ge₂O₇, CaO, Ga₂O₃, GeO₂, SrAl₂O₄, SrGa₂O₄, SrP₂O₇, MgGa₂O₄, Mg₂GeO₄, MgGeO₃, BaAl₂O₄, Ga₂Ge₂O₇, BeGa₂O₄, Y₂SiO₅, Y₂GeO₅, Y₂Ge₂O₇, Y₄GeO₈, Y₂O₃, Y₂O₂S, SnO₂, a mixed crystal thereof and the like may be preferably used.

### (Dielectric Layer)

The dielectric layer for use in the present invention is provided between the light-emitting layer and the back electrode layer and contains a metal oxide. The metal oxide which can be contained in the dielectric layer includes an oxide of one element or a plurality of elements selected from Ti, Ba, Sr, Nb, Pb, Ta, Li, Y, Al, Zr, Si and the like.
Specific examples thereof include TiO₂, BaTiO₃, SrTiO₃, PbTiO₃, KNbO₃, PbNbO₃, Ta₂O₃, BaTa₂O₆, LiTaO₃, Y₂O₃, Al₂O₃, ZrO₂, AlON, and SiO₂. Such a metal oxide may be provided as a thin-film crystal layer, may be used as a film having a particle structure, or may be a combination thereof.
In the case of a thin-film crystal layer, the layer may be a thin film formed on a substrate by a vapor phase method such as sputtering or may be a sol-gel film using an alkoxide of Ba, Sr or the like. In this case, the film thickness is usually from 1 to 50 µm. The substrate above is considered to include both the substrate on the back electrode-containing side and the substrate on the light-emitting layer-containing side. In the case of a film having a particle structure, the particle is preferably small enough for the thickness of the light-emitting layer. Specifically, the particle size is preferably from 1/3 to 1/1000 of the thickness of the light-emitting layer.
The dielectric layer may contain an organic binder having a high dielectric constant. Specific examples thereof include cyanoresin fluororubber.

### (Back Electrode Layer)

The back electrode layer for use in the present invention is disposed on the dielectric layer and is preferably provided between the dielectric layer and the insulating layer.
For the back electrode layer on the side from which light is not extracted, an arbitrary material having electrical conductivity can be used. A material is appropriately selected from a metal such as gold, silver, platinum, copper, iron and aluminum, and graphite according to the mode of the device fabricated, the temperature in the fabrication process, and the like. Above all, it is important that the heat conductivity is high, and the heat conductivity is preferably 2.0 W/cm•deg or more.
Also, for ensuring high heat radiation and electric conduction, a metal sheet or a metal mesh may be preferably used in the periphery of the EL device.
The thickness of the back electrode layer is not particularly limited but is preferably from 0.01 µm to 1 mm.

### (Insulating Layer)

In the present invention, an insulating layer may also be provided on the back electrode layer.
The insulating layer may be formed, for example, by vapor-depositing or coating a liquid dispersion or the like where an insulating inorganic material, polymer material or inorganic material powder is dispersed in a polymer material.

### (White•Fluorescent Dye)

The usage of the present invention is not particularly limited, but considering usage as a light source, the emission color is preferably white.
The method for obtaining white light emission is preferably a method of mixing a plurality of light-emitting materials that emit light of three primary colors or complementary colors (e.g., combination of blue-green-red, combination of bluish green-orange). Also, the methods described in JP-A-7-166161, JP-A-9-245511 and JP-A-2002-62530 are preferred, where a blue or bluish green light-emitting fluorescent material and a fluorescent pigment or dye are used and a part of the emitted light is wavelength-converted (emitted) into green or red, thereby producing white light. As regards the fluorescent dye, a rhodamine-based fluorescent dye is preferably used. In the CIE chromaticity coordinates (x, y), the x value is preferably in the range of 0.30 to 0.4 and the y value is preferably in the range of 0.30 to 0.40.

### (Encapsulation•Water Absorption)

The surface emitting-type EL device of the present invention is preferably processed at the end by using an appropriate sealing material to eliminate the effect of moisture from the external environment. In the case where the substrate itself of the device has sufficiently high blocking property, the encapsulation is preferably performed by superposing a blocking sheet on the top of the device fabricated and sealing the circumference with a curable material such as epoxy. Also, for preventing curling of a sheet-like device, a blocking sheet may be provided on both surfaces. In the case where the substrate of the device has moisture permeability, it is necessary to provide a blocking sheet on both surfaces.
The blocking sheet is selected from glass, metal, plastic film and the like according to the purpose, but a moisture-proof film having a multilayer structure consisting of an organic polymer compound and a layer composed of silicon oxide disclosed, for example, in JP-A-2003-249349 can be preferably used. A 3-chlorotrifluoroethylene and the like may also be preferably used.
The encapsulation process is, as described in JP-B-63-27837 (the term "JP-B" as used herein means an "examined Japanese patent publication"), preferably performed in a vacuum or in an atmosphere purged with an inert gas, and it is important, as described in JP-A-5-166582, to sufficiently reduce the water content before the encapsulation process.

In fabricating the EL device, a water-absorbing layer is preferably provided inside of the moisture-proof film. The water-absorbing layer is preferably composed of a material having high water absorptivity and high water holding ability, such as nylon and polyvinyl alcohol. High transparency is also important. As long as the transparency is high, a material such as cellulose and paper may also be preferably used.

### (Ultraviolet Absorbent)

In the present invention, an inorganic compound such as cerium oxide described in JP-A-9-22781 can be used. More preferably, an organic compound can be used.
In the present invention, a compound having a triazine skeleton with high molar extinction coefficient is preferably used as the ultraviolet absorbent and, for example, the compounds described in the following publications may be used.
These compounds are a compound preferably added to a photographic light-sensitive material but are effective also in the present invention. Examples of the compound which can be used include the compounds described in JP-A-46-3335, JP-A-55-152776, JP-A-5-197074, JP-A-5-232630, JP-A-5-307232, JP-A-6-211813, JP-A-8-53427, JP-A-8-234364, JP-A-8-239368, JP-A-9-31067, JP-A-10-115898, JP-A-10-147577, JP-A-10-182621, German Patent Publication 19739797A, European Patent Publication 711804A and JP-T-8-501291 (the term "JP-T" as used herein means a "published Japanese translation of a PCT patent application").
The ultraviolet absorbent must be, as a matter of importance, disposed not to allow the light emitter layer and the fluorescent dye to absorb ultraviolet light and may be added to the moisture-proof film or water-absorbing film outside of the transparent electrode layer. Of course, the ultraviolet absorbent can be coated or printed as an ultraviolet absorbing layer on the surface of such a film.

### (Thin Film Forming Method)

Examples of the thin film forming method which can be preferably used for the formation of the above-described transparent electrical conductor layer, transparent semiconductor layer, transparent insulator layer, light-emitting layer, dielectric layer, back electrode layer and the like include a sputtering method, an electron beam deposition method, a resistance heating deposition method, a chemical vapor deposition method (CVD method), and a plasma CVD method.

### (Power Source)

The surface emitting-type electroluminescent device of the present invention is preferably driven by an alternating current. The driving effective voltage is preferably 300 V or less, more preferably from 10 to 200 V, still more preferably from 30 to 150 V.
In the present invention, the power source for driving the surface emitting-type EL device preferably has a function of, detecting the current and keeping it constant.

### (Others)

In the device construction of the present invention, a substrate, a reflection layer, various protective layers, a filter, a light-scattering reflection layer and the like may be added, if desired. In particular, as regards the substrate, a flexible transparent resin sheet can be used, in addition to a glass substrate or a ceramic substrate.

While the present invention has been described in detail and with reference to specific embodiments thereof, it will be apparent to one skilled in the art that various changes and modifications can be made therein without departing from the spirit and scope of the present invention.
This application is based on Japanese Patent Application (Patent Application No. 2006-146676) filed on May 26, 2006, the contents of which are incorporated herein by way of reference.

## Claims

1. A surface emitting-type electroluminescent device having a stacked structure in which a transparent electrical conductor layer, a transparent semiconductor layer and/or a transparent insulator layer, a light-emitting layer, a dielectric layer and a back electrode layer are arrayed in this order, said transparent electrical conductor layer, said transparent semiconductor layer, said transparent insulator layer and said dielectric layer each comprising a metal oxide.

2. The surface emitting-type electroluminescent device as claimed in claim 1, wherein said transparent semiconductor layer and said transparent insulator layer each comprises at least one element selected from the group consisting of elements belonging to Groups 12, 13 and 14 of the Periodic Table.

3. The surface emitting-type electroluminescent device as claimed in claim 1 or 2, wherein said light-emitting layer comprises a compound semiconductor comprising at least one element selected from the group consisting of Group 2 elements and Group 16 elements of the Periodic Table and/or at least one element selected from the group consisting of Group 13 elements and Group 15 elements of the Periodic Table.

4. The surface emitting-type electroluminescent device as claimed in any one of claims 1 to 3, wherein said transparent electrical conductor layer is formed on a film comprising an organic material and/or a plastic substrate.

5. The surface emitting-type electroluminescent device as claimed in any one of claims 1 to 4, wherein an effective driving voltage is 100 V or less.
